# EUROPEAN PATENT APPLICATION

(11) **EP 1 788 751 A1**
(43) Date of publication of application: **23.05.2007**
(21) Application number: 05025057.0
(22) Date of filing: 16.11.2005
(51) Int. Cl.: H04L 12/56

(54) **A method of handling RLC SDUs during RLC reset and RLC re-establishment in a UMTS system**

(71) Applicant: High Tech Computer Corp., Tao-Yuan City (TW)
(72) Inventor: Wu, Chih-Hsiang, Hsin-Tien City Taipei Hsien (TW)
(74) Representative: Schmitz, Hans-Werner

(57) **Abstract**

A method of transmitting downlink data after re-establishment of a universal terrestrial radio access network (UTRAN) (20) acknowledged mode (AM) radio link control (RLC) entity includes receiving a plurality of RLC service data units (SDUs) from a packet data convergence protocol (PDCP) layer of the UTRAN (20); dividing the received RLC SDUs into RLC protocol data units (PDUs) and transmitting the RLC PDUs to a user equipment (UE) (10); receiving acknowledgments from the UE (10) for received RLC PDUs; receiving a re-establishment request at a transmitting side of the AM RLC entity from upper layers of the UTRAN (20); discarding all RLC SDUs that have been fully transmitted to the UE (10) before the re-establishment request is received; and discarding all RLC SDUs that have not been fully transmitted to the UE (10) when the re-establishment request is received.

## Description

The present invention relates to an improved method of handling RLC SDUs during RLC reset and RLC re-establishment in a UTRAN acknowledged mode RLC entity according to the pre-characterizing clause of claim 1.

When upper layers request the transmitting side of the universal terrestrial radio access network (UTRAN) acknowledge mode (AM) radio link control (RLC) entity to be re-established or when an RLC reset event is performed, packet data convergence protocol (PDCP) protocol data units (PDUs) that have not been transmitted from the UTRAN to a user equipment (UE) are put in a buffer for later transmission. However, when the UTRAN later starts transmission after the re-establishment or the reset, all PDUs that have not been successfully acknowledged are transmitted again. The result of this is that some PDUs are transmitted twice since those PDUs that are put in the buffer for later transmission will be transmitted regardless of what other PDUs are being transmitted by the UTRAN. Therefore, sending the same PDUs twice wastes radio resources and the delivery sequence of PDCP PDUs is disrupted.

This in mind, the present invention aims at providing a method of handling RLC SDUs during RLC reset and RLC re-establishment in a UMTS system.

This is achieved by a method of transmitting downlink data after re-establishment of a UTRAN AM RLC entity according to claim 1. The dependent claims pertain to corresponding further developments and improvements.

As will be seen more clearly from the detailed description following below, the claimed method discards all RLC SDUs that have not been fully transmitted to the UE when the re-establishment request is received or when a reset is performed.

In the following, the invention is further illustrated by way of example, taking reference to the accompanying drawings. Thereof
Fig.1 is a diagram illustrating protocol layers between UE and UTRAN;
Fig.2 is a diagram illustrating PDCP PDUs being segmented into RLC PDUs according to the prior art;
Fig.3 illustrates a situation in which the UTRAN AM RLC entity is re-established; and
Fig.4 illustrates a situation in which the UTRAN AM RLC entity is re-established according to the present invention.

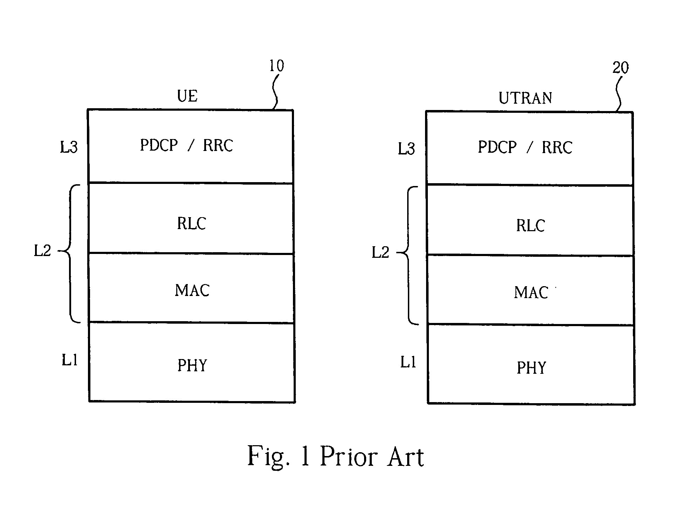

In a universal mobile telecommunications system (UMTS), a universal terrestrial radio access network (UTRAN) communicates with a plurality of mobile stations, also referred to as user equipment (UE). Fig.1 is a diagram illustrating network layers of the UMTS protocol. Layers of a UE 10 and a UTRAN 20 are shown. Both the UE 10 and the UTRAN 20 are illustrated having the same network layers. Level 3 layers contain both a packet data convergence protocol (PDCP) layer and a radio resource control (RRC) layer. Level 2 layers contain both a radio link control (RLC) layer and a media access control (MAC) layer. Level 1 contains a physical layer. These layers are all well known to those skilled in the art, and will only be described as they relate to the present invention.

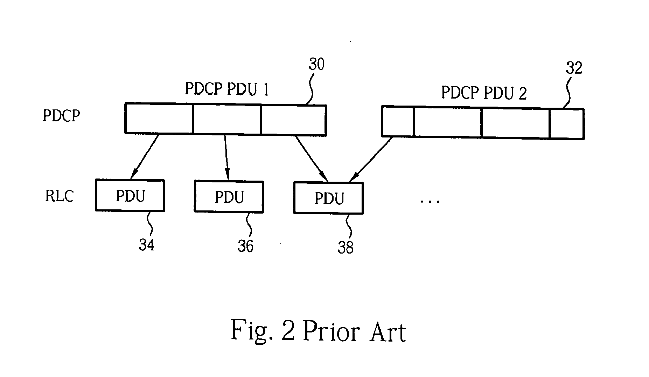

The present invention primarily concerns interaction between the PDCP layer and the RLC layer. The terms service data unit (SDU) and protocol data unit (PDU) are well known in the art. The terms PDU and SDU are relative with respect to the current layer being described. An SDU is a piece of information received from a layer above the current layer for transmission using the service of the current layer. A PDU is a piece of information processed by the current layer. Please refer to Fig.2. Fig.2 is a diagram illustrating PDCP PDUs 30, 32 being segmented into RLC PDUs 34, 36, 38 according to the prior art. The RLC receives PDCP PDUs as RLC SDUs and segments the RLC SDUs into RLC PDUs. For simplicity, packet headers are ignored in this diagram. The size of each RLC PDU 34, 36, 38 is configured by the UTRAN 20, whereas the size of each PDCP PDU 30, 32 is not set by the UTRAN 20. As shown in Fig.2, a first PDCP PDU 30 is segmented to produce RLC PDUs 34 and 36 and part of RLC PDU 38. Since there is still room in the RLC PDU 38 for more data, part of the PDCP PDU 32 data is also added to the RLC PDU 38. This segmentation process continues for dividing all PDCP PDUs into RLC PDUs.

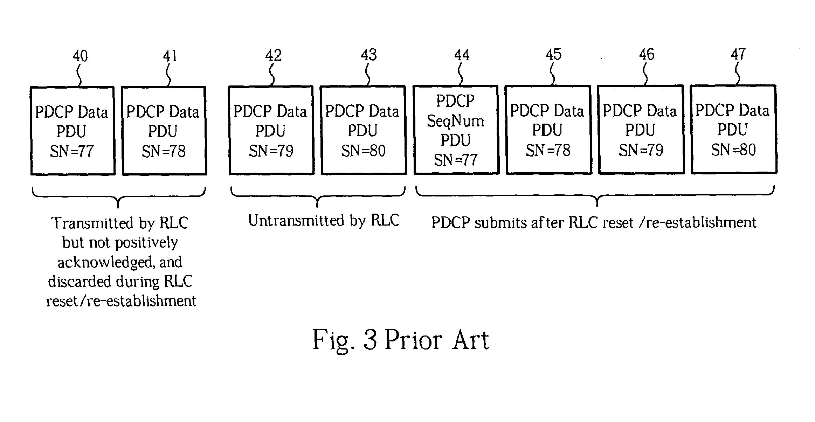

In acknowledged mode (AM) transmission and reception, each time an AM RLC entity sends a PDU, a corresponding acknowledgement should be received from the AM RLC entity receiving the PDU. For radio bearers that are configured to support lossless downlink RLC PDU size change, occasionally the UTRAN 20 will change the size of the downlink RLC PDU segment size. In this case, upper layers will request the transmitting side of the UTRAN AM RLC entity to be re-established. Please refer to Fig.3. Fig.3 illustrates a situation in which the UTRAN AM RLC entity is re-established. The UTRAN PDCP entity submits PDCP data PDUs 40-43 with sequence numbers (SNs) equaling 77, 78, 79, and 80 to the UTRAN AM RLC entity. The UTRAN AM RLC entity then begins transmitting the PDCP data PDUs to the UE 10. When the downlink RLC PDU size is changed by the UTRAN 20, the transmitting side of the UTRAN AM RLC entity is re-established. At this time, the PDCP Data PDUs 40, 41 with SNs = 77 and 78 have been transmitted by the transmitting side of UTRAN AM RLC entity but have not been acknowledged positively. According to the prior art, when the transmitting side of the UTRAN AM RLC entity is re-established, the AM RLC entity discards all RLC SDUs that have been transmitted completely in the transmitting side. This means that RLC SDUs containing data for the PDCP Data PDUs 40, 41 with SN = 77 and 78 are discarded. At this point the PDCP Data PDUs 42, 43 with SNs = 79 and 80 have not been transmitted by the transmitting side of UTRAN AM RLC entity. These PDCP Data PDUs 42, 43 are put in a buffer for later transmission.

Due to the re-establishment, the AM RLC entity re-segments the SDUs that were not discarded into AM data (AMD) PDUs with the configured RLC PDU size (which may be different from the size before the re-establishment) so a RLC SDU containing PDCP Data PDU 42 with SN = 79 and a RLC PDU containing PDCP PDU 43 with SN = 80 are re-segmented. If the PDCP entity in the UTRAN 20 has to trigger a PDCP SN synchronization procedure, it submits one PDCP SeqNum PDU 44 to lower layers. Because the smallest unacknowledged SN is 77, the PDCP entity submits a PDCP SeqNum PDU 44 with SN = 77 containing the same data as the PDCP Data PDU 40 with SN = 77. PDCP Data PDUs 45, 46, 47 with SN = 78, 79, and 80 are also submitted to the AM RLC entity again.

Unfortunately, since the PDCP Data PDUs 42, 43 with SNs = 79 and 80 were not discarded during re-establishment, they were put in a buffer for later transmission. That means when the UTRAN AM RLC entity later submits PDCP SeqNum PDU 44 with SN = 77 and PDCP Data PDUs 45, 46, 47 with SN = 78, 79, and 80, PDCP data PDUs with SN = 79 and 80 are transmitted twice. Not only does this waste radio resources by transmitting PDUs twice, it also disrupts the delivery sequence of the PDCP data PDUs since the SNs = 79 and 80 are sent from the buffer before the SNs = 77-80 are sent after re-establishment.

Please continue to refer to Fig.3. The same problem described above that applies to re-establishment also applies to RLC reset events. Consider again the situation for a radio bearer that is configured to support lossless downlink RLC PDU size change. The UTRAN PDCP entity submits PDCP data PDUs 40-43 with SNs equaling 77, 78, 79, and 80 to the UTRAN AM RLC entity. The UTRAN AM RLC entity then begins transmitting the PDCP data PDUs to the UE 10. If a condition of RLC reset is fulfilled, the RLC reset procedure is triggered. At this time, the PDCP Data PDUs 40, 41 with SNs = 77 and 78 have been transmitted by the transmitting side of UTRAN AM RLC entity but have not been acknowledged positively. According to the prior art, when the UTRAN AM RLC entity is reset, the AM RLC entity discards all RLC SDUs that have been transmitted completely in the transmitting side. This means that RLC SDUs containing data for the PDCP Data PDUs 40, 41 with SN = 77 and 78 are discarded. At this point the PDCP Data PDUs 42, 43 with SNs = 79 and 80 have not been transmitted by the transmitting side of UTRAN AM RLC entity. These PDCP Data PDUs 42, 43 are put in a buffer for later transmission.

Next, the PDCP entity in the UTRAN 20 triggers a PDCP SN synchronization procedure by submitting one PDCP SeqNum PDU 44 to lower layers. Because the smallest unacknowledged SN is 77, the PDCP entity submits a PDCP SeqNum PDU 44 with SN = 77 containing the same data as the PDCP Data PDU 40 with SN = 77. PDCP Data PDUs 45, 46, 47 with SN = 78, 79, and 80 are also submitted to the AM RLC entity again.

Unfortunately, no handling method is specified for the RLC SDUs that were not transmitted before the reset in the transmitting side of the UTRAN AM RLC entity. If the PDCP Data PDUs 42, 43 with SNs = 79 and 80 were not discarded during the reset, they were put in a buffer for later transmission. That means when the UTRAN AM RLC entity later submits PDCP SeqNum PDU 44 with SN = 77 and PDCP Data PDUs 45, 46, 47 with SN = 78, 79, and 80, PDCP data PDUs with SN = 79 and 80 are transmitted twice. Not only does this waste radio resources by transmitting PDUs twice, it also disrupts the delivery sequence of the PDCP data PDUs since the SNs = 79 and 80 are sent from the buffer before the SNs = 77-80 are sent after the reset.

The prior art also suffers from other problems because the proper handling for certain situations is not specified. For instance, the lossless function is not provided for uplink transmission in a UE PDCP entity for a radio bearer configured to support lossless DL RLC PDU size change. The handling for RLC SDUs that have not been transmitted completely before RLC re-establishment is not specified clearly in the specification. Therefore, a bad design, such as discarding RLC SDUs that have not been transmitted completely before the RLC re-establishment, will introduce transmission delays because the discarded RLC SDUs have to be recovered by upper layer retransmission.

Similarly, the handling for RLC SDUs that have not been transmitted completely before RLC reset is not specified clearly in the specification. Therefore, a bad design, such as discarding RLC SDUs that have not been transmitted completely before the RLC reset, will introduce transmission delays because the discarded RLC SDUs have to be recovered by upper layer retransmission.

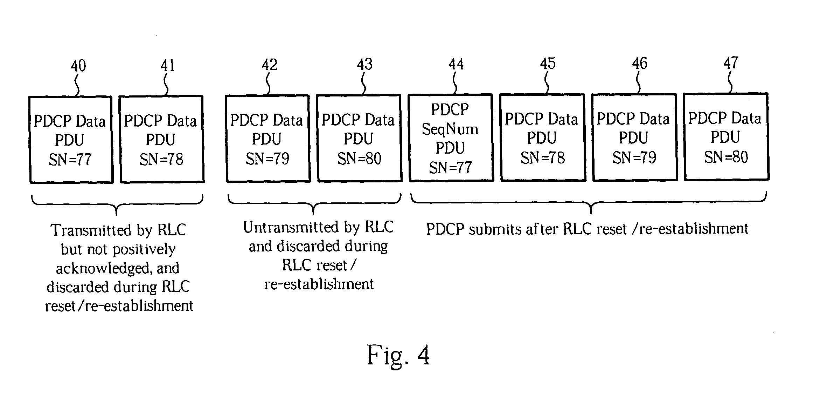

Please refer to Fig.4. Fig.4 illustrates a situation in which the UTRAN AM RLC entity is re-established according to the present invention. The present invention method of handling the re-establishment is an improvement upon the prior art method, and the same reference numbers will be used in Fig.4 and Fig.3 for convenience.

The UTRAN PDCP entity submits PDCP data PDUs 40-43 with sequence numbers (SNs) equaling 77, 78, 79, and 80 to the UTRAN AM RLC entity. The UTRAN AM RLC entity then begins transmitting the PDCP data PDUs to the UE 10. When the downlink RLC PDU size is changed by the UTRAN 20, the transmitting side of the UTRAN AM RLC entity is re-established. At this time, the PDCP Data PDUs 40, 41 with SNs = 77 and 78 have been transmitted by the transmitting side of UTRAN AM RLC entity but have not been acknowledged positively. Like the prior art, the present invention method also has the AM RLC entity discard all RLC SDUs that have been transmitted completely in the transmitting side when the transmitting side of the UTRAN AM RLC entity is re-established. Differing from the prior art, the present invention also discards the RLC SDUs that were not transmitted before the re-establishment in the transmitting side of the UTRAN AM RLC entity. Therefore, RLC SDUs containing data for the PDCP Data PDUs 40-43 with SN = 77-80 are discarded.

If the PDCP entity in the UTRAN 20 has to trigger a PDCP SN synchronization procedure, it submits one PDCP SeqNum PDU 44 to lower layers. Because the smallest unacknowledged SN is 77, the PDCP entity submits a PDCP SeqNum PDU 44 with SN = 77 containing the same data as the PDCP Data PDU 40 with SN = 77. PDCP Data PDUs 45, 46, 47 with SN = 78, 79, and 80 are also submitted to the AM RLC entity.

Since the RLC SDUs containing data for the PDCP Data PDUs 42, 43 with SN = 79, 80 are discarded during re-establishment, they are not placed in a buffer for later transmission. Thus, the PDCP Data PDUs with SN = 79 and 80 are only transmitted to the UE 10 one time instead of two, and the in-sequence delivery is properly maintained in the UE AM RLC entity.

Please continue to refer to Fig.4. The present invention handling method that is applied to re-establishment can also be applied to RLC reset events. The UTRAN PDCP entity submits PDCP data PDUs 40-43 with SNs equaling 77, 78, 79, and 80 to the UTRAN AM RLC entity. The UTRAN AM RLC entity then begins transmitting the PDCP data PDUs to the UE 10. If a condition of RLC reset is fulfilled, the RLC reset procedure is triggered. This reset state can be triggered by either a RESET PDU or a RESET acknowledge (ACK) PDU. At this time, the PDCP Data PDUs 40, 41 with SNs = 77 and 78 have been transmitted by the transmitting side of UTRAN AM RLC entity but have not been acknowledged positively. Like the prior art, the present invention method also has the AM RLC entity discard all RLC SDUs that have been transmitted completely in the transmitting side when the transmitting side of the UTRAN AM RLC entity is reset. Differing from the prior art, the present invention also discards the RLC SDUs that were not transmitted before the reset in the UTRAN AM RLC entity. Therefore, RLC SDUs containing data for the PDCP Data PDUs 40-43 with SN = 77-80 are discarded.

Next, the PDCP entity in the UTRAN 20 triggers a PDCP SN synchronization procedure by submitting one PDCP SeqNum PDU 44 to lower layers. Because the smallest unacknowledged SN is 77, the PDCP entity submits a PDCP SeqNum PDU 44 with SN = 77 containing the same data as the PDCP Data PDU 40 with SN = 77. PDCP Data PDUs 45, 46, 47 with SN = 78, 79, and 80 are also submitted to the AM RLC entity.

Since the RLC SDUs containing data for the PDCP Data PDUs 42, 43 with SN = 79, 80 are discarded during reset, they are not placed in a buffer for later transmission. Thus, the PDCP Data PDUs with SN = 79 and 80 are only transmitted to the UE 10 one time instead of two, and the in-sequence delivery is properly maintained in the UE AM RLC entity.

The present invention also specifies a handling method for uplink transmission in a UE PDCP entity for a radio bearer configured to support lossless DL RLC PDU size change. The handling for RLC SDUs that have not been transmitted completely before RLC re-establishment is performed as follows. The AM RLC entity in the UE 10 discards all RLC SDUs that have been transmitted completely before the RLC re-establishment. However, all of the RLC SDUs that have not been transmitted completely before the RLC re-establishment are not discarded and are re-segmented into AMD PDUs by the UE 10 after the reset is performed successfully. Therefore, transmission delays are reduced with the present invention method since the RLC SDUs that were not been transmitted completely before the RLC re-establishment do not have to be recovered through upper layer transmission if they were discarded.

The same handling method can also be applied to a reset applied to a UE PDCP entity performing uplink transmission for a radio bearer configured to support lossless DL RLC PDU size change. That is, the AM RLC entity in the UE 10 discards all RLC SDUs that have been transmitted completely before the RLC reset. However, all of the RLC SDUs that have not been transmitted completely before the RLC reset are not discarded and are re-segmented into AMD PDUs by the UE 10 after the reset is performed successfully.

In summary, the present invention handling methods save resources by not retransmitting data twice and avoid transmission delays by not forcing discarded RLC SDUs to be recovered through upper layer retransmission.

## Claims

1. A method of transmitting downlink data after re-establishment of a universal terrestrial radio access network (UTRAN) (20) acknowledged mode (AM) radio link control (RLC) entity, the method comprising:
receiving a plurality of RLC service data units (SDUs) from a packet data convergence protocol (PDCP) layer of the UTRAN (20);
dividing the received RLC SDUs into RLC protocol data units (PDUs) and transmitting the RLC PDUs to a user equipment (UE) (10);
receiving acknowledgments from the UE (10) for received RLC PDUs;
receiving a re-establishment request at a transmitting side of the AM RLC entity from upper layers of the UTRAN (20);
discarding all RLC SDUs that have been fully transmitted to the UE (10) before the re-establishment request is received; and
discarding all RLC SDUs that have not been fully transmitted to the UE (10) when the re-establishment request is received.

2. The method of claim 1, wherein the UTRAN (20) RLC entity supports lossless downlink RLC PDU size changes.

3. A method of transmitting downlink data after reset of a universal terrestrial radio access network (UTRAN) (20) acknowledged mode (AM) radio link control (RLC) entity, the method comprising:
receiving a plurality of RLC service data units (SDUs) from a packet data convergence protocol (PDCP) layer of the UTRAN (20);
dividing the received RLC SDUs into RLC protocol data units (PDUs) and transmitting the RLC PDUs to a user equipment (UE) (10);
receiving acknowledgments from the UE (10) for received RLC PDUs;
receiving a reset command at the AM RLC entity for resetting the AM RLC entity;
discarding all RLC SDUs that have been fully transmitted to the UE (10) before the reset occurs; and
discarding all RLC SDUs that have not been fully transmitted to the UE (10) when the reset occurs.

4. The method of claim 3, wherein the UTRAN (20) RLC entity supports lossless downlink RLC PDU size changes.

5. The method of claim 3, wherein the reset command is a RLC RESET PDU.

6. The method of claim 3, wherein the reset command is a RLC RESET acknowledge (ACK) PDU.

7. A method of transmitting uplink data after re-establishment of a user equipment (UE) (10) acknowledged mode (AM) radio link control (RLC) entity, the method comprising:
receiving a plurality of RLC service data units (SDUs) from a packet data convergence protocol (PDCP) layer of the UE (10);
dividing the received RLC SDUs into RLC protocol data units (PDUs) and transmitting the RLC PDUs to a universal terrestrial radio access network (UTRAN) (20) ;
receiving acknowledgments from the UTRAN (20) for received RLC PDUs;
receiving a re-establishment request at a transmitting side of the AM RLC entity from upper layers of the UE (10);
discarding all RLC SDUs that have been fully transmitted to the UTRAN (20) before the re-establishment request is received; and
keeping all RLC SDUs that have not been fully transmitted to the UTRAN (20) when the re-establishment request is received and retransmitting the RLC SDUs that were not fully transmitted after the re-establishment of the transmitting side of the AM RLC entity.

8. A method of transmitting uplink data after reset of a user equipment (UE) (10) acknowledged mode (AM) radio link control (RLC) entity, the method comprising:
receiving a plurality of RLC service data units (SDUs) from a packet data convergence protocol (PDCP) layer of the UE (10);
dividing the received RLC SDUs into RLC protocol data units (PDUs) and transmitting the RLC PDUs to a universal terrestrial radio access network (UTRAN) (20);
receiving acknowledgments from the UTRAN (20) for received RLC PDUs;
receiving a reset command at the AM RLC entity for resetting the AM RLC entity;
discarding all RLC SDUs that have been fully transmitted to the UTRAN (20) before the reset occurs; and
keeping all RLC SDUs that have not been fully transmitted to the UTRAN (20) when the reset occurs and retransmitting the RLC SDUs that were not fully transmitted after the AM RLC entity is reset.

9. The method of claim 8, wherein the reset command is a RLC RESET PDU.

10. The method of claim 8, wherein the reset command is a RLC RESET acknowledge (ACK) PDU.

## Amended claims

### Amended claims in accordance with Rule 86(2) EPC.

**1.** A method of transmitting downlink data after re-establishment of a universal terrestrial radio access network (UTRAN) (20) acknowledged mode (AM) radio link control (RLC) entity, the method comprising:
receiving a plurality of RLC service data units (SDUs) from a packet data convergence protocol (PDCP) layer of the UTRAN (20);
dividing the received RLC SDUs into RLC protocol data units (PDUs) and transmitting the RLC PDUs to a user equipment (UE) (10);
receiving acknowledgments from the UE (10) for received RLC PDUs;
receiving a re-establishment request at a transmitting side of the AM RLC entity from upper layers of the UTRAN (20); and
discarding all RLC SDUs that have been fully transmitted to the UE (10) before the re-establishment request is received; **characterized by**
discarding all RLC SDUs that have been fully transmitted to the UE (10) when the re-establishment request is received,
wherein the UTRAN (20) RLC entity supports lossless downlink RLC PDU size changes.

**2.** A method of transmitting downlink data after reset of a universal terrestrial radio access network (UTRAN) (20) acknowledged mode (AM) radio link control (RLC) entity, the method comprising:
receiving a plurality of RLC service data units (SDUs) from a packet data convergence protocol (PDCP) layer of the UTRAN (20);
dividing the received RLC SDUs into RLC protocol data units (PDUs) and transmitting the RLC PDUs to a user equipment (UE) (10);
receiving acknowledgments from the UE (10) for received RLC PDUs;
receiving a reset command at the AM RLC entity for resetting the AM RLC entity; and
discarding all RLC SDUs that have been fully transmitted to the UE (10) before the reset occurs; **characterized by** discarding all RLC SDUs that have not been fully transmitted to the UE (10) when the reset occurs,
wherein the UTRAN (20) RLC entity supports lossless downlink RLC PDU size changes

**3.** The method of claim 2, wherein the reset command is a RLC RESET PDU.

**4.** The method of claim 2, wherein the reset command is a RLC RESET acknowledge (ACK) PDU.
